# EUROPÄISCHE PATENTANMELDUNG

(11) **EP 3 939 715 A1**
(43) Veröffentlichungstag der Anmeldung: **19.01.2022**
(21) Anmeldenummer: 20186223.2
(22) Anmeldetag: 16.07.2020
(51) Int. Cl.: B21D 43/00, B21D 43/08, B21D 43/14, B23Q 7/05, B65G 13/10

(54) **BESCHICKUNGSVORRICHTUNG FÜR EINE WERKZEUGMASCHINE, WERKZEUGMASCHINE, FERTIGUNGSEINRICHTUNG UND VERFAHREN ZUR BESCHICKUNG**

(71) Anmelder: Bystronic Laser AG, 3362 Niederönz (CH)
(72) Erfinder: Woidasky, Lars, 99867 Gotha (DE)
(74) Vertreter: Fink Numrich Patentanwälte PartmbB

(57) **Zusammenfassung**

Die Erfindung betrifft eine Beschickungsvorrichtung (100) für eine Werkzeugmaschine (200), mit einem Übergabebereich (110) eingerichtet zur Übergabe und/oder Unterstützung eines Werkstücks (300, 310) während einer Bearbeitung durch die Werkzeugmaschine (200) und mindestens einem Transportbereich (120, 120a, 120b, 120c) eingerichtet zum Transport eines Werkstücks (300, 310) zu dem Übergabebereich (110), wobei der mindestens eine Transportbereich (120) mehrere angetriebene Rollen (130) zur Unterstützung und translatorischen und/oder rotatorischen Bewegung eines oder mehrerer Werkstücke (300) aufweist, und wobei der Übergabebereich (110) mehrere angetriebene Rollen (130) und/oder ein Positionierungselement (140) zur Positionierung eines Werkstücks (300, 310) aufweist, wobei das Positionierungselement (140) in Richtung zu einem Bearbeitungsbereich (210) der Werkzeugmaschine (200) verfahrbar ist.

## Beschreibung

Die Erfindung betrifft eine Beschickungsvorrichtung für eine Werkzeugmaschine, eine Werkzeugmaschine, eine Fertigungseinrichtung mit mindestens einer Werkzeugmaschine und mindestens einer Beschickungsvorrichtung sowie ein Verfahren zur Beschickung einer Werkzeugmaschine. Insbesondere betrifft die Erfindung eine Beschickungsvorrichtung für eine Werkzeugmaschine nach Anspruch 1, eine Werkzeugmaschine nach Anspruch 11, eine Fertigungseinrichtung nach Anspruch 13 und ein Verfahren zur Beschickung nach Anspruch 14.

Die automatische, bzw. halbautomatische Beschickung von Blechbearbeitungsmaschinen erfordert ein festes Schema zur Übergabe des Werkstückes an die Maschine. Das Blech muss zu jeder Zeit an einer vorgegebenen Stelle an das System übergeben werden und wird typischerweise auf die gleiche Weise zur Bearbeitungsstelle wie zum Beispiel dem Biegen zugeführt.

Der Abtransport des bearbeiteten Werkstückes erfolgt dabei analog. Auf diese Weise kann zwar ein effizienter Transport innerhalb der Maschine erreicht werden, jedoch nur für jeweils ein definiertes Werkstück. Andere Werkstücke müssen entsprechend neu programmiert werden und sogar die Maschine mechanisch darauf angepasst werden.

Schwenkbiegemaschinen oder Panelbender, auch Biegezentren genannt, werden üblicherweise manuell oder halbautomatisch beschickt. Eine manuelle Maschine wird hierbei, ähnlich einer Abkantmaschine, vom Bediener betrieben und das Blech per Hand zugeführt, gedreht, gewendet und gehalten.

Ein Halbautomat kann das Werkstück allein handhaben - also drehen, halten, sowie zu- und abführen. Der Bediener muss dazu das Blech in einer von der Maschinensteuerung und der Mechanik vorgegebenen Art, an dem Vorderanschlag an einer exakten Stelle der Maschine anlegen. Das Blech wird dann bearbeitet und muss anschließend an der gleichen Position entnommen werden.

Der Erfindung liegt nun die Aufgabe zugrunde, die Nachteile des Standes der Technik zu vermeiden und eine verbesserte Beschickungsvorrichtung für eine Werkzeugmaschine, eine verbesserte Werkzeugmaschine, eine verbesserte Fertigungseinrichtung beziehungsweise ein verbessertes Verfahren zur Beschickung bereitzustellen.

Diese Aufgabe wird gelöst durch ein Bauteil für eine Beschickungsvorrichtung für eine Werkzeugmaschine nach Anspruch 1, eine Werkzeugmaschine nach Anspruch 11, eine Fertigungseinrichtung nach Anspruch 13 und ein Verfahren zur Beschickung nach Anspruch 14.

Die erfindungsgemäße Beschickungsvorrichtung für eine Werkzeugmaschine umfasst einen Übergabebereich eingerichtet zur Übergabe und/oder Unterstützung eines Werkstücks während einer Bearbeitung durch die Werkzeugmaschine und mindestens einen Transportbereich eingerichtet zum Transport eines Werkstücks zu dem Übergabebereich, wobei der mindestens eine Transportbereich mehrere angetriebene Rollen zur Unterstützung und translatorischen und/oder rotatorischen Bewegung eines oder mehrerer Werkstücke aufweist, und wobei der Übergabebereich mehrere angetriebene Rollen und/oder ein Positionierungselement zur Positionierung eines Werkstücks aufweist, wobei das Positionierungselement in Richtung zu einem Bearbeitungsbereich der Werkzeugmaschine verfahrbar ist.

Die «freibeweglichen» Rollen ermöglichen es dem Bediener an jedem erreichbaren Ort des Übergabebereichs und/oder des Transportbereichs das Werkstück aufzulegen. Somit ist eine einfache und flexible Bedienung von drei 3 Seiten möglich. Von diesem Ort des Auflegens kann das Werkstück oder Blech automatisch zur Verarbeitung oder Referenzierung transportiert werden. Dadurch können die Zuführung und Bereitstellung der Werkstücke optimiert werden. Zum Beispiel können gestapelte Bleche um den Übergabebereich oder Auflagebereich herum ohne zusätzliche Wege des Bedieners abgearbeitet werden oder eine automatisierte Zuführung an beliebiger Stelle erfolgen.

Die angetriebenen Rollen transportieren das aufgelegte Blech zu einer Referenzierungsstelle im Übergabebereich oder Auflagebereich, mit dem Positionierungselement wie zum Beispiel einem oder mehreren Anschlagfingern. Diese Anschläge können freibeweglich, genau steuerbar sein und das Blech exakt auf die berechnete Position der Maschinensteuerung positionieren. Das Blech kann danach fixiert werden, zum Beispiel mit Vakuum, Reibschluss oder Magnetkraft, und kann der Maschine für die Bearbeitung zugeführt werden. Vorteilhaft wird das Blech nach der Fixierung von den Rollen an eine gesteuerte Achse übergeben, um positionsgetreu der Bearbeitung zugeführt zu werden.

Wenn zum Beispiel kleine Bleche nur in der Mitte gehandhabt werden, bleibt bei üblichen Systemen fast der gesamte vordere Bereich des Panelbenders ungenutzt. Durch die angetriebenen Rollen können alle Bereiche genutzt werden und dies auch zeitlich parallel, zum Beispiel für temporäres Lagern sowohl fertiger als auch unbearbeiteter Bleche und/oder den An- und Abtransport. Darüber hinaus muss das fertige Blech nicht exakt an der Zuführposition entnommen werden, was das System effizienter macht. Der Bediener muss außerdem nicht genau auf die richtige Position, Lage und Referenzierung des Bleches achten, da dies über angetriebenen Rollen gegebenenfalls in Zusammenarbeit mit einer Steuerung übernommen wird. Damit wird Ausschuss vermieden oder verringert.

Die Abführung bearbeiteter, also gebogener Bleche, kann ebenso effizient erfolgen und das Blech nach der Bearbeitung an jeder Stelle des Übergabebereichs oder Auflagebereichs entnommen werden. Auch hier können um den Auflagebereich entsprechende Lagerungsmöglichkeiten geschaffen und genutzt werden. Der Transport des gebogenen Teils von der Bearbeitungsmaschine muss hier nicht über die gesteuerte Achse mit Fixiermöglichkeit (Manipulator) erfolgen, sondern kann in Gänze mit den Rollen erfolgen, da eine genaue Positionierung nun nicht mehr erforderlich ist. Damit kann die gesteuerte Achse bereits ein neues Blech zur Maschine zuführen, während das vorher gebogene Blech noch abgeführt wird. Der Blechtransport beschränkt sich nicht nur auf die Blechbearbeitungsmaschine, ebenso sind Verkettungen zu anderen Maschinengattungen oder Lagerorten möglich. So können Bleche von einer Schneidmaschine zu einer BlechBiegemaschine gefördert werden und danach in ein Lager transportiert werden. Der Bediener würde dann lediglich die Maschine überwachen, müsste aber selbst nicht mehr eingreifen.

Es kann vorgesehen sein, dass die angetriebene Rolle über einen Winkelbereich von 360 Grad in einer Ebene des Übergabebereichs oder des Transportbereichs drehbar ist. Die angetriebene Rolle kann um eine Achse senkrecht zu der Ebene in jedem Winkel von 0° bis 360° ein Werkstück bewegen. Diese Rollen sind in ihrer Anordnung derart gestaltet, dass sie das Werkstück oder Blech drehen als auch schieben können. Die Dreh-, bzw. Achsrichtung dieser Rollen kann entsprechend dem Transportgut aufgebaut werden. In einer möglichen Ausbildung können drei einzelne Rollen, deren Achsen um je 120° Grad versetzt sind, Bleche drehen und transportieren. Angepasste Geschwindigkeiten dieser Rollen können Blechbewegungen in vorgesehenen Bahnen oder Transportwegen ermöglichen.

Es kann vorgesehen sein, dass die angetriebenen Rollen auf eine Translationsrichtung in Richtung des mindestens einen Positionierungselements hin ausgerichtet sind. Werkstücke zum Beispiel mit geringeren Qualitätsanforderungen können direkt über die angetriebenen Rollen zugeführt werden. Die Zuführbewegung zur Maschine kann alternativ über eine angesteuerte Maschinenachse wie einen Manipulator durchgeführt werden, um möglichst geringe Toleranzabweichungen erzielen zu können.

Es kann vorgesehen sein, dass mehrere Positionierungselemente vorgesehen sind. Dies erlaubt eine einfache Anpassung an unterschiedliche Werkstücke durch selektive Verwendung der Positionierungselemente. Zwischen den Positionierungselementen können Gleitelemente und/oder angetriebene Rollen angeordnet sein.

Es kann ferner vorgesehen sein, dass das oder jedes Positionierungselement in eine Ruheposition unterhalb einer Ebene des Übergabebereichs versetzbar ist und in eine Arbeitsposition aus der Ebene des Übergabebereichs heraus bewegbar ist. Vorteilhaft ist das Positionierungselement in der Arbeitsposition zur Positionierung eines Werkstücks eingerichtet. Die Positionierung oder Referenzierung des Bleches kann auch an anderen Stellen des Übergabebereichs erfolgen, welche für das jeweilige Werkstück oder Blech effizienter sind. Kleinere Bleche müssen nicht am hintersten Punkt angelegt werden, da sie dann einen weiteren Weg zum Biegebereich zurücklegen müssen und der Prozess damit verlangsamt wird. Dazu werden in den Auflagebereich versenkbare Positionierungselement wie zum Beispiel Anschläge eingelassen, die entsprechend der Geometrie des Bleches nach oben gefahren werden und eine Referenzierung des Bleches in der Nähe des Biegebereichs ermöglichen. Diese Anschläge sind systematisch in der Nähe der Maschine verteilt.

Es kann vorgesehen sein, dass das Positionierungselement in der Ebene des Übergabebereichs seitlich in eine erste und in wenigstens eine zweite senkrecht dazu angeordnete Richtung bewegbar ist.

Es kann vorgesehen sein, dass ein Sensor zur Erfassung der Position und/oder Ausrichtung eines Werkstücks vorgesehen ist. Die Bestimmung der Position des beliebig aufgelegten Bleches kann mit Sensoren beispielsweise mit Kameras überwacht werden. Die Genauigkeit dieser Überwachung kann durch ein flächig auf dem Übergabebereich oder Auflagebereich angebrachtes, optisches Muster erhöht werden. Ebenso kann an einer, von der Steuerung vorgegebenen Position, das Blech lediglich grob orientiert abgelegt werden. Dieser Vorgang kann optisch unterstützt werden zum Beispiel durch eine Lichtanzeige oder Ähnliches. Das nicht exakt abgelegte Blech kann dann über mechanische Einführungshilfen an den Fingern genau angelegt werden, indem mit den Rollen eine vorab festgelegte Bahn gefahren wird. Werkstücke können so direkt über die Rollen zugeführt werden und mit entsprechender Sensorik überwacht werden (Stromdifferenzmessung, Kameras, Ultraschall, Lasermessung usw.). Damit wäre in diesem Fall weder eine zusätzliche, gesteuerte Maschinenachse wie ein Manipulator oder Rotator, noch ein exaktes Anlegen des Bleches an einem Anschlag notwendig. Im Falle einer Kameranutzung, oder andersartiger Überwachung von Geometrie und Position der Bleche kann die Maschinensteuerung eine andere oder günstige Transportbahn errechnen. Dann können Bleche z.B. zwischengelagert werden und der Transport gerade benötigter Biegeteile erfolgt in einer Bahn um diese Lagerstelle herum. So lassen sich mehrere parallele Transportpfade für die Werkstücke realisieren, was die Fertigung flexibler gestaltet.

Es kann ferner vorgesehen sein, dass eine Messeinheit vorgesehen ist eingerichtet zum Erfassen der Stromaufnahme der mehreren angetriebenen Rollen. Weiterhin können Position und auch Geometrie des Bleches über eine Stromvergleichsmessung der Antriebe der angetriebenen Rollen ermittelt werden. Es wird ein höherer Strom aufgenommen, wenn ein Blech auf der Rolle aufliegt. Hierfür sind auch diverse, andere Sensorarten geeignet. Durch die Betrachtung mehrerer Rollen kann die Größe, die Orientierung und auch das Gewicht des Werkstücks bestimmt werden. Die Bestimmung kann mit einem Biege- oder Fertigungsplan kombiniert werden, um die Genauigkeit der Bestimmung zu verbessern.

Es kann vorgesehen sein, dass eine gemeinsame Antriebseinheit für mehrere der angetriebenen Rollen vorgesehen ist und dass für jede der angetriebenen Rollen eine schaltbare Kupplung als Verbindung zu der Antriebseinheit vorgesehen ist. Die angetriebenen Rollen können mit allen denkbaren Antrieben betrieben werden: Elektromechanisch, hydraulisch, pneumatisch, usw. Dabei soll mindestens eine Reihe, besser aber jede einzelne Rolle ansteuer- und bewegbar sein. Dies kann üblicherweise über einen Antrieb je Rolle geschehen. Es ist aber ebenso möglich, Rollen gemeinsam anzutreiben und mit schaltbaren Kupplungen auszurüsten. Dann ist ein effizienterer Betrieb möglich, die Rollen können jedoch weiterhin einzeln angesteuert werden.

Es kann ferner vorgesehen sein, dass der Übergabebereich und der mindestens eine Transportbereich neben den mehreren angetriebenen Rollen mehrere nicht angetriebene Rollen aufweisen. Die Rollenantriebe können modular aufgebaut sein und können entsprechend typischen Anwendungen modular versetzt werden. Ungenutzte Bereiche des Übergabebereichs können mit nicht angetriebenen Rollen gleicher Baugröße besetzt werden und bei Bedarf auch wieder mit Antrieben ersetzt werden. Oft genutzte Handlingbereiche können mit mehr Rollen pro Fläche aufgebaut werden, um einen exakten Transport zu gewährleisten, sowie die Beförderungsmöglichkeit für kleine Werkstückabmessungen zu verbessern.

Eine erfindungsgemäße Werkzeugmaschine ist eingerichtet zur Bearbeitung von Werkstücken unter Verwendung von Werkzeugen und umfasst mindestens eine Beschickungsvorrichtung wie zuvor beschrieben. Es gelten die gleichen Vorteile und Modifikationen wie zuvor beschrieben.

Es kann vorgesehen sein, dass die Werkzeugmaschine ein Positionierungselement aufweist, das zur Positionierung eines Werkstücks eingerichtet ist. Die angetriebenen Rollen transportieren das aufgelegte Blech zu einer Referenzierungsstelle im Übergabebereich oder Auflagebereich, nämlich dem Positionierungselement wie zum Beispiel einem oder mehreren Anschlagfingern. Diese Anschläge können freibeweglich, genau steuerbar sein und das Blech exakt auf die berechnete Position der Maschinensteuerung positionieren. Das Blech kann danach fixiert werden, zum Beispiel mit Vakuum, Reibschluss oder Magnetkraft, und kann der Maschine für die Bearbeitung zugeführt werden.

Eine erfindungsgemäße Fertigungseinrichtung umfasst mindestens eine Werkzeugmaschine wie zuvor beschrieben, mindestens eine Beschickungsvorrichtung wie zuvor beschrieben und mindestens eine weitere der Werkzeugmaschine vor- und/oder nachgelagerte Fertigungseinheit, wobei jeweils ein Transportbereich zwischen der Werkzeugmaschine und der vor- und/oder nachgelagerten Fertigungseinheit angeordnet ist. In den meisten Fällen wird nur die Beschickung einer speziellen Maschinenart und somit eines Bearbeitungsprozesses wie zum Beispiel Biegen betrachtet. Im Normalfall wird ein Werkstück jedoch in mehreren Schritten zu seiner endgültigen Form gebracht und verschiedene Fertigungseinheiten beziehungsweise Maschinenarten müssen miteinander sinnvoll verkettet werden. So kann es sinnvoll sein, eine Schneidmaschine effizient mit einer Biegemaschine und einer Zerspanungsmaschine, Lager, Farbgebung, usw. zu verketten. Diese Verkettung des Materialflusses, das heißt des Transports von Werkstücken, zwischen den Fertigungseinheiten kann vorteilhaft über den oder die Transportbereich mit den angetriebenen Rollen realisiert werden. Es können Verbindungen zwischen zwei oder auch mehreren Fertigungseinheiten realisiert werden.

Ein erfindungsgemäßes Verfahren zur Beschickung einer Werkzeugmaschine eingerichtet zur Bearbeitung von Werkstücken umfasst die Schritte,
- Transportieren eines Werkstücks mittels mehrerer angetriebener Rollen zu einem Übergabebereich für die Werkzeugmaschine;
- Übergeben und/oder Unterstützen des Werkstücks in dem Übergabebereich während einer Bearbeitung durch die Werkzeugmaschine.

Das Verfahren ermöglicht, dass die Zu- und Abführung von Werkstücken gleichzeitig in einem System stattfinden kann. Diese gleichzeitige Nutzung spart Platz und verbessert die Prozessgeschwindigkeit. Es können Bleche und/oder fertige Biegeteile auf dem Übergabebereich oder Auflagebereich zwischengelagert werden, um effizient vom Bediener oder System transportiert zu werden - fertige und zwischengelagerte Teile können beispielsweise abtransportiert werden, wenn zwischengelagerte Rohbleche gerade der Maschine zugeführt werden. Dann entstehen keine unproduktiven Zeiten für den Bediener.

Die typische Dreheinheit (Rotator) eines Panelbenders kann entfallen, da das Blech durch die vorliegende Erfindung mittels der angetriebenen Rollen gedreht werden kann. Dazu ist eine exakte, direkte Positionierung mit den Rollen möglich, so dass ein erneutes Referenzieren nach jeder Drehung nicht unbedingt erforderlich ist. Der Übergabebereich kann ebenso für eine Automatisierung einer Biegemaschine genutzt werden und so zum Beispiel eine halbautomatische Biegemaschine entstehen lassen. Die Übergabe an die Werkzeugmaschine kann mittels mehrerer angetriebener Rollen und/oder eines oder mehrerer Positionierungselemente realisiert sein.

Ein Roboter kann einfach eingesetzt werden und Bleche auf der Maschine absetzen. Er ersetzt einfach den Bediener. Dabei ist es völlig unerheblich, wo und in welcher Ausrichtung die Bleche abgelegt werden, da sie später ohnehin automatisch referenziert werden. Der Roboter benötigt demnach keine spezielle Programmierung oder Positionsüberwachung, und kann vergleichsweise einfach in das System eingebunden werden.

Es ist denkbar, mehrere Maschinen mit einem einzigen Auflagebereich auszurüsten. Dann können zum Beispiel zwei gegenüberliegende Maschinen wie zwei Panelbender in einer Art Tandembetrieb miteinander kombiniert werden. So könnten die Einzelmaschinen Biegungen an einem Werkstück durchführen, ohne dabei die Werkzeuge wechseln zu müssen. Ebenso können ein Panelbender und eine konventionelle Biegemaschine kombiniert werden. Biegungen, welche auf der jeweils einen Maschine nicht möglich sind, werden dann automatisch von der anderen übernommen. Weiterhin kann durch die flexible und unabhängige Nutzung der Rolleneinheiten ein Bediener beide Maschinen mit unterschiedlichen Teilen versorgen oder aber zwei Bediener, zwei Maschinen mit einer Zuführung bedienen.

Ansonsten gelten die gleichen Vorteile und Modifikationen wie zuvor beschrieben.

Es kann vorgesehen sein, dass in dem Übergabebereich das Werkstück positioniert und der Werkzeugmaschine mittels mehrerer angetriebener Rollen zugeführt wird. So kann auf eine Maschinenachse verzichtet werden. Zum Beispiel zur Erhöhung der Genauigkeit kann zusätzlich zu den angetriebenen Rollen eine Maschinenachse zur positionsgenauen Zuführung der Werkstücke zu der Werkzeugmaschine vorgesehen sein.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine perspektivische Ansicht einer Beschickungsvorrichtung mit einer Werkzeugmaschine;
- Figur 2: eine Detaildarstellung der Beschickungsvorrichtung;
- Figur 3: eine perspektivische Ansicht einer Beschickungsvorrichtung mit einer Manipulatorachse;
- Figur 4: eine perspektivische Ansicht einer Beschickungsvorrichtung nur mit Rollen;
- Figur 5: eine perspektivische Ansicht einer Beschickungsvorrichtung mit An- und Abtransport;
- Figur 6: eine perspektivische Ansicht einer Fertigungseinrichtung mit einer Werkzeugmaschine, einer Beschickungsvorrichtung sowie einer weiteren Fertigungseinheit;
- Figur 7: zeigt eine perspektivische Ansicht einer Biegevorrichtung mit einem Zuführbereich und einem Lager;
- Figur 8: zeigt eine perspektivische Ansicht einer Biegevorrichtung mit einem erweiterten Zuführbereich;
- Figur 9: zeigt eine perspektivische Ansicht einer Biegevorrichtung mit einem Zwischenlager im Zuführbereich;
- Figur 10: zeigt eine perspektivische Ansicht einer Biegevorrichtung mit Zuführbereich bei einer Schlussbiegung; und
- Figur 11: zeigt eine perspektivische Ansicht einer Biegevorrichtung mit Zuführbereich im Stationsbetrieb.

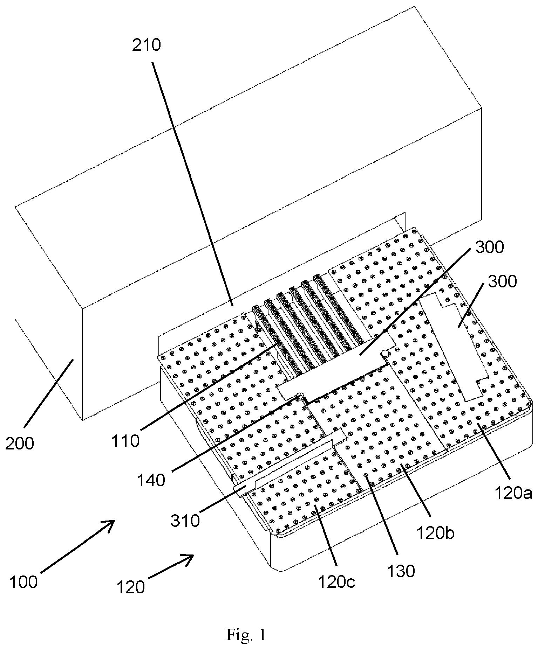

Figur 1 zeigt eine perspektivische Ansicht einer Beschickungsvorrichtung 100 mit einer Werkzeugmaschine 200. Die Beschickungsvorrichtung 100 transportiert und führt Werkstücke wie zum Beispiel dünne Bleche 300 der Werkzeugmaschine 200 zu. Weiterhin transportiert die Beschickungsvorrichtung 100 von der Werkzeugmaschine 200 bearbeitete Werkstücke 310 ab.

Die Beschickungsvorrichtung 100 umfasst einen Übergabebereich 110 zur Übergabe und/oder Unterstützung eines Werkstücks 300 während einer Bearbeitung durch die Werkzeugmaschine 200 und mindestens einen Transportbereich 120 zum Transport eines Werkstücks 300 zu dem Übergabebereich 110.

Der Transportbereich 120 besteht hier aus drei einzelnen Bereichen 120a, 120b und 120c. Alternativ kann diese Anordnung als drei Transportbereiche 120a, 120b und 120c bezeichnet werden. Die Werkstücke 300 und 310 können übergreifend zwischen den Transportbereichen 120 bewegt werden.

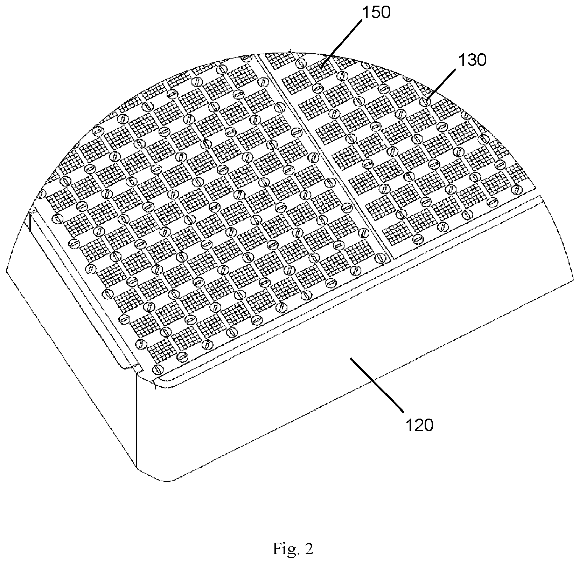

Für den Transport der Werkstücke 300 und 310 umfasst der Transportbereich 120 mehrere angetriebene Rollen 130, welche eingerichtet sind zur Unterstützung und translatorischen und/oder rotatorischen Bewegung eines oder mehrerer Werkstücke 300 und 310. Die angetriebenen Rollen 130 werden im Zusammenhang mit Figur 2 näher beschrieben. Auch der Übergabebereich 110 kann mehrere angetriebene Rollen 130 und/oder ein Positionierungselement 140 aufweisen. Die angetriebene Rollen 130 und das Positionierungselement 140 dienen zur Positionierung eines Werkstücks 300 und zur Zuführung in Richtung zu einem Bearbeitungsbereich 210 der Werkzeugmaschine 200. verfahrbar ist. Die Werkzeugmaschine 200 kann ein Panelbender oder eine Biegemaschine sein. Die Zuführung des Werkstücks 300 kann auch in Richtung eines Randbereichs des Übergabebereichs 110 definiert sein, wobei der Randbereich eingerichtet ist zum Anschluss oder Anlegen an die Werkzeugmaschine 200.

Das Positionierungselement 140 kann in eine Ruheposition in eine Ebene des Übergabebereichs 110 versenkbar sein, so dass Werkstücke 300 und 310 über das Positionierungselement 140 hinweg bewegt werden können. Das Positionierungselement 140 kann in eine Arbeitsposition aus der Ebene des Übergabebereichs 110 heraus bewegbar ist, so dass das Positionierungselement 140 in dieser Arbeitsposition zur Positionierung eines Werkstücks 300 oder 310 eingerichtet ist.

Der Transportbereich 120 kann den Übergabebereich 110 wie dargestellt an drei Seiten umschließen. Ebenso kann der Transportbereich 120 an zwei Seiten des Übergabebereichs 110 angeordnet sein. Zum Beispiel kann dann der Übergabebereich 110 länger ausgeführt sein, so dass der ausgebildet ist. Dann kann der Übergabebereich 110 auch zeitgleich die Funktion als Übergabebereich 110, im Bereich der Werkzeugmaschine 200, sowie als Transportbereich, im Bereich entfernt von der Werkzeugmaschine 200, übernehmen.

Mögliche Bediener der Werkzeugmaschine 200 beziehungsweise der Beschickungsvorrichtung 100 können Werkstücke 300 und 310 an allen Bereichen 120a, 120b und 120c auflegen oder entnehmen.

In Fig. 1 ist die Beschickungsvorrichtung 100 mit dem Transportbereich 120 und dem Übergabebereich 110 mit drei Werkstücken 300 und 310 dargestellt, die zeitgleich bewegt beziehungsweise transportiert werden. In dem Transportbereich 120a wird das Werkstück 300 in diesem Beispiel aufgelegt, dann der Referenzierung an den Positionierungselementen 140 zugeführt und dort mit Hilfe des Vorschubs der angetriebenen Rollen 130 angelegt. Bei erfolgreicher Positionierung kann ein Signal für eine Steuerung der Werkzeugmaschine 200 beziehungsweise der Beschickungsvorrichtung 100 erzeugt werden.

Danach wird das Blech vom einem Manipulator, wie einer angesteuerten und exakt positionierbaren Achse, fixiert, der Werkzeugmaschine 200 zugeführt und dort gebogen.

Das fertig gebogene Werkstück 310 wird anschließend vom Manipulator übergeben, das heißt entfixiert und von den angetriebenen Rollen 130 zum Beispiel in den Transportbereich 120c transportiert. Dort kann es entnommen werden. Ideal ist hierbei eine frühe Übergabe des Werkstücks 300, denn dann kann auch früher bereits das nächste Werkstück 300 zugeführt werden, weil der Manipulator früher wieder frei ist. Die Vorgänge sind sehr flexibel, die Bleche können überall auflegt oder entnommen werden.

Das oder die Positionierungselemente 140 können den Manipulator bilden. Die Positionierungselemente 140 sind translatorisch in Richtung der Werkzeugmaschine 200 beziehungsweise in mehrere Richtungen verfahrbar. Sie können das Werkstück 300 entweder selbst fixieren, zum Beispiel mittels einer Vakuumsaugers oder können das Werkstück 300 mittels eines Anschlags in der Werkzeugmaschine 200 fixieren. Zudem sind die Positionierungselemente 140 versenkbar ausgebildet.

Die Beschickungsvorrichtung 100 mit dem Transportbereich 120 und dem Übergabebereich 110 stellt durch die angetriebenen Rollen 130 mehrere voneinander unabhängige Transportbahnen oder -wege bereit, so dass zeitgleich mehrere Werkstücke 300 und 310 bewegt werden können.

Figur 2 zeigt eine Detaildarstellung des Transportbereichs 120 mit den angetriebenen Rollen 130. Die angetriebene Rolle 130 kann über einen Winkelbereich von 360 Grad in einer Ebene des Übergabebereichs 110 oder des Transportbereichs 120 angetrieben sein. In dieser Ebene wird das Werkstück 300, das auf den Rollen 130 aufliegt, bewegt und kann mittels der angetriebenen Rolle 130 um eine senkrecht zu der Ebene verlaufende Achse rotiert werden. Die angetriebene Rolle 130 kann zum Beispiel eine angetriebene Kugel umfassen. Alternativ können zum Beispiel drei Rollen eine jeweils um 120 Grad versetzte Antriebsrichtung haben, so dass diese drei Rollen im Zusammenspiel das Werkstück 300 in jede Richtung bewegen können. Dann können die Rollen zum Beispiel jeweils Kugelsegmente wie Räder enthalten.

Eine gemeinsame Antriebseinheit kann für mehrere der angetriebenen Rollen vorgesehen sein. Dann kann für jede der angetriebenen Rollen eine schaltbare Kupplung als Verbindung zu der Antriebseinheit vorgesehen sein.

Der Übergabebereich 110 und der oder die Transportbereiche 120 können neben den mehreren angetriebenen Rollen 130 auch mehrere nicht angetriebene Rollen umfassen. Aus Kostengründen kann dies vorteilhaft sein. Die Rollen oder einzelne Bereiche mit Rollen können modular aufgebaut sein und sind dann tauschbar. Auf diese Weise kann die Anlage für verschiedene Zwecke oder unterschiedliche Werkstücke umgerüstet werden. Vorteilhaft ist es, wenn zwei oder drei angetriebene Rollen 130 unter einem Werkstück angeordnet sind. Dies kann erreicht werden, wenn die Dichte, Anzahl und/oder Verteilung der angetriebenen Rollen 130 an die Größe der zu bearbeitenden beziehungsweise zu transportierenden Werkstücke angepasst werden.

Zwischen den Rollen 130 ist ein optionales optisches Muster 150 zur Verbesserung der Genauigkeit für Kameramessungen dargestellt. Es kann ein Sensor wie eine Kamera zur Erfassung der Position und/oder Ausrichtung eines Werkstücks vorgesehen sein.

Werkstücke 300 und 310 können so direkt über die Rollen 130 zugeführt werden und mit entsprechender Sensorik wie Stromdifferenzmessung, Kameras, Ultraschall, Lasermessung überwacht werden. Im Falle einer Kameranutzung, oder andersartiger Überwachung von Geometrie und Position der Bleche kann die Maschinensteuerung eine andere oder günstige Transportbahn errechnen. Dann können Bleche z.B. zwischengelagert werden und der Transport gerade benötigter Biegeteile erfolgt in einer Bahn um diese Lagerstelle herum. So lassen sich mehrere parallele Transportpfade für die Werkstücke realisieren, was die Fertigung flexibler gestaltet.

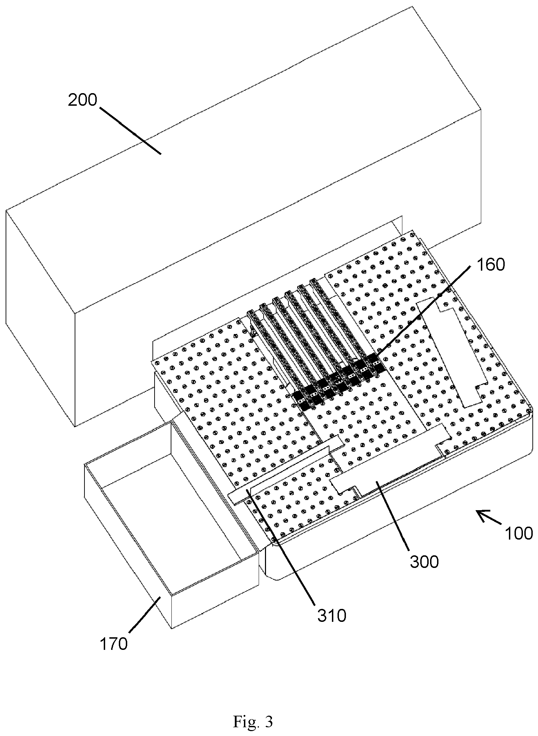

Figur 3 zeigt eine perspektivische Ansicht einer Beschickungsvorrichtung 100 mit mehreren parallelen Manipulatorachsen 160 und mit einer beispielhaften Lagerungsmöglichkeit fertiger Werkstücke 310.

Die Werkstücke 300 werden rechts aufgelegt, automatisch zur Referenzierung zugeführt, an den Manipulatorachsen 160 fixiert und mit diesen zur Werkzeugmaschine 200 bewegt. Die fertigen Werkstücke 310 werden im linken Bereich über eine Rutsche in eine Lagerungsbox 170 oder Ähnliches gebracht. Idealerweise kann die Befüllung der Lagerungsbox 170 optimiert werden, wenn z.B. die Werkstücke 310 erst im vorderen Bereich der Lagerungsbox 170 zugeführt werden. Je nach Volumen von Blech und Lagerung wird dann bei fortschreitender Befüllung die Lagerungsbox 170 immer weiter hinten befüllt. Die Darstellung ist ebenfalls nur beispielhaft, die Anordnung von Lagerungsbox 170 und Zuführung sind flexibel.

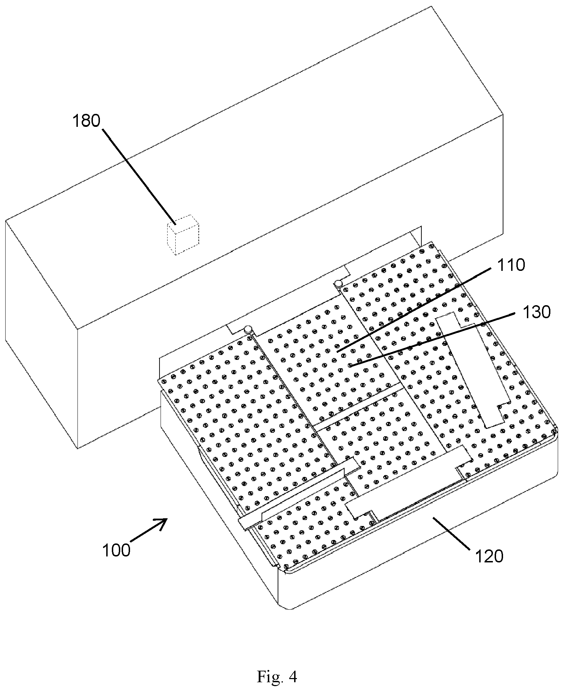

Figur 4 zeigt eine perspektivische Ansicht einer Beschickungsvorrichtung 100, bei der Übergabebereich 110 nur mit Rollen, das heißt ohne Referenzierungseinheit oder Manipulator, ausgebildet sein kann. Diese Möglichkeit erlaubt den vollständigen Wegfall der Anschläge. In diesem Fall wird die Position des Werkstücks durch die beschriebenen Sensoriken bestimmt und kann der Bearbeitungsmaschine ohne zusätzliche Referenzierung zugeführt werden. Dazu wird die Zuführbahn prozessbegleitend entsprechend der gemessenen Position angepasst. Eine Kamera ist für die Messung besonders vorteilhaft.

Gemäß einer weiteren Ausgestaltung wird das Werkstück über die Rollen nur zur Bearbeitung zugeführt. Dann wird das Werkstück in der Bearbeitungsmaschine über die Anschläge genau positioniert und zur Bearbeitung übergeben. Die Manipulatorachse im Zuführbereich kann in dieser Ausgestaltung entsprechend entfallen.

Die Rollen sind teilweise oder vollständig angetriebene Rollen 130. Die Referenzierung der Werkstücke 300 wird dann von den angetriebenen Rollen 130 übernommen. Dazu kann ein Sensor 180 wie eine Kamera zur Erfassung der Position und/oder Ausrichtung eines Werkstücks 300 vorgesehen sein. Alternativ oder zusätzlich kann eine Messeinheit vorgesehen sein zum Erfassen der Stromaufnahme der mehreren angetriebenen Rollen. Aus einer erhöhten Stromaufnahme kann auf die Belastung durch ein von dieser Rolle transportiertes Werkstück geschlossen werden. Durch die Betrachtung mehrerer Rollen kann die Größe, die Orientierung und auch das Gewicht des Werkstücks bestimmt werden. Die Bestimmung kann mit einem Biege- oder Fertigungsplan kombiniert werden, um die Genauigkeit der Bestimmung zu verbessern.

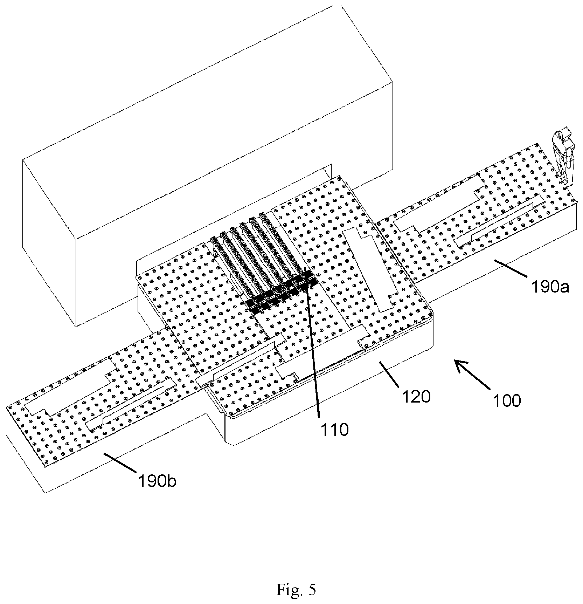

Figur 5 zeigt eine perspektivische Ansicht einer Beschickungsvorrichtung 100 mit An- und Abtransport über modulare Rolleneinheiten 190a und 190b.

Am Ende/Anfang der beiden zusätzlichen Rolleneinheiten 190a und 190b können ein oder mehrere Bediener, sowie auch andere Maschinen oder Lagersysteme angeordnet sein. Es ist auch möglich nur eine dieser Rolleneinheiten 190a und 190b anzuordnen, da die Rollen unabhängig voneinander antreibbar sind und somit gleichzeitig nebeneinander Teile zu- und abführen können. Die Rolleneinheiten 190a und 190b können bei Bedarf mit antreibbaren Rollen 130 bestückt werden.

Die Transportbereiche 120 und auch die Rolleneinheiten 190a und 190b können einen Bereich als Zwischenlager für Werkstücke 300 oder fertige Werkstücke 310 zur Verfügung stellen. So kann vor einem Bediener beispielhaft ein Blechstapel liegen, welcher abgearbeitet werden muss. Der Bediener kann das Fertigungslos nacheinander abarbeiten oder aber zum Beispiel andere Blechteile neben dem ersten Blechstapel auflegen und zuführen. Die Maschinensteuerung kann dann eine Bahn berechnen, den Bereich des ersten Stapels aussparen und das andere Blech zuführen. Das ermöglicht eine besonders flexible Arbeit mit der Maschine, da so unter anderem Serienlose problemlos für Einzelteile oder dringende Aufträge unterbrochen werden können.

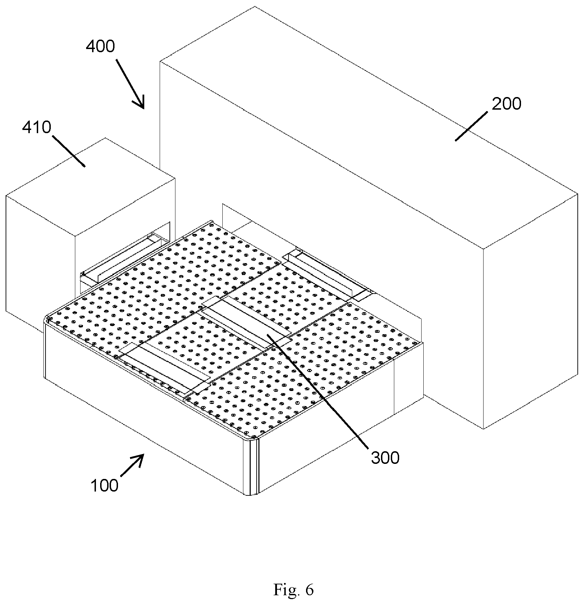

Figur 6 zeigt eine perspektivische Ansicht einer Fertigungseinrichtung 400 mit einer Werkzeugmaschine 200, einer Beschickungsvorrichtung 100 sowie einer weiteren der Werkzeugmaschine 200 vor- und/oder nachgelagerten Fertigungseinheit 410. Die weitere Fertigungseinheit könnte auch ein Zwischenlager für Halbfabrikate beziehungsweise Halbfertigprodukte oder fertige Werkstücke sein.

In Figur 6 ist zu sehen, dass die Beschickungsvorrichtung 100 zwei und auch mehrere Fertigungseinheiten flexibel miteinander verbinden kann und damit einen optimierten Werkstückfluss ermöglicht. Ein weiterer Vorteil ist, dass bereits in der Zuführung zu der Werkzeugmaschine 200 mehrere Werkstücke 300 vorhanden sein können, was zu einer besseren Auslastung der Werkzeugmaschine 200 führt. Bei klassischen Maschinen kann nur ein Werkstück in der Zuführung sein.

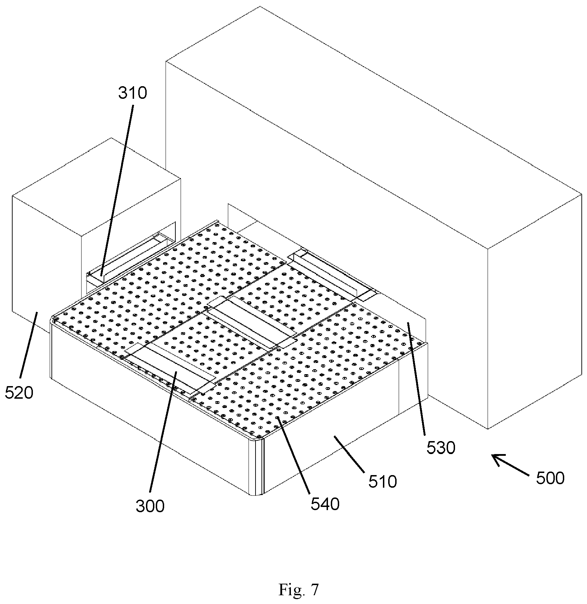

Im Folgenden wird anhand der Figuren 7 bis 11 eine Möglichkeit zur Optimierung der Prozesszeit insbesondere durch Lagerung oder Zwischenlagerung von Werkstücken - auch in unterschiedlichen Fertigungsstufen oder -graden - beschrieben.

Ein Panelbender ist eine hochautomatisierte Blechbiegemaschine, mit der ein komplexes Biegeteil ohne weitere Bedienereingriffe hergestellt werden kann. Besonders der automatische Wechsel der Niederhalterwerkzeuge dieser Maschinengattung ermöglichen diese hohe Flexibilität und den Automatisierungsgrad.

Gewöhnlich werden die Niederhalterwerkzeuge für nahezu jede Biegung am umzuformenden Teil angepasst. Zum Start eines Programmes werden die Daten an die Maschinensoftware übertragen, das Programm geladen und die Niederhalterwerkzeuge werden entsprechend den Parametern innerhalb der Maschine positioniert. Das Rohblech wird aufgelegt, dem Biegebereich automatisch zugeführt und der erste Schenkel gebogen. Typischerweise wird das Blech nach der ersten Biegung so positioniert (gedreht), so das mit demselben Werkzeugsatz auch die zweite Biegung durchgeführt werden kann. Je nach Komplexität der folgenden Biegungen müssen die Niederhalterwerkzeuge nun neu positioniert werden, um mit den bestehenden Schenkeln am Biegeteil nicht zu kollidieren. Dieser Werkzeugwechsel wird immer innerhalb des Biegeprozesses eines Teiles durchgeführt und kostet damit wesentliche Zeit.

Es liegt nun die Aufgabe zugrunde, die Nachteile des Standes der Technik zu vermeiden und eine verbesserte Biegevorrichtung beziehungsweise ein verbessertes Verfahren zum Ausführen eines Biegevorgangs bereitzustellen.

Diese Aufgabe wird gelöst durch eine Biegevorrichtung beziehungsweise ein Verfahren zum Ausführen eines Biegevorgangs.

Verfahren zum Ausführen eines Biegevorgangs von mehreren Werkstücken aus Blech mit einer Biegevorrichtung, wobei ein Biegevorgang mehrere Biegeschritte umfasst und wobei die Biegevorrichtung einen Zuführbereich mit mehreren angetriebenen Rollen aufweist, welche eingerichtet sind zur Unterstützung und translatorischen und/oder rotatorischen Bewegung eines oder mehrerer Werkstücke, mit den Schritten:
a) Zuführen eines Werkstücks zu der Biegevorrichtung durch die angetriebenen Rollen;
b) Biegen eines ersten Biegeschritts des Werkstücks in der Biegevorrichtung;
c) Abführen des Werkstücks von der Biegevorrichtung durch die angetriebenen Rollen zum Zwischenlagern des Werkstücks in dem Zuführbereich;
d) Wiederholen der Schritte a) bis c) für weitere Werkstücke;
e) Vorbereiten der Biegevorrichtung für einen weiteren Biegeschritt;
f) Wiederholen der Schritte a) bis d) für weitere Werkstücke.

Es kann vorgesehen sein, dass der Schritt b) mehrere Biegeschritte umfasst. Vorteilhaft ist, dass alle mit dieser Konfiguration der Biegevorrichtung möglichen Biegeschritte durchgeführt werden.

Es kann vorgesehen sein, dass das Vorbereiten der Biegevorrichtung einen Wechsel der Biegewerkzeuge umfasst.

Es kann ferner vorgesehen sein, dass das Verfahren so lange durchgeführt wird bis der letzte Biegeschritt des letzten Werkstücks durchgeführt ist. Nach dem letzten Biegeschritt kann das jeweilige Werkstück abtransportiert werden. Dies kann in ein separates Lager oder Zwischenlager oder in ein Zwischenlager in dem Zuführbereich sein.

Es kann vorgesehen sein, dass der Zuführbereich ein Lager, wie zum Beispiel ein Paternoster-Regal, umfasst oder mit einem derartigen Lager verbunden ist, um die durch einen oder mehrere Biegeschritte entstandenen Halbfabrikate dem Lager zuzuführen und dort temporär einzulagern.

Der Zuführbereich kann dem zuvor beschriebenen Transportbereich und/oder Übergabebereich entsprechen. Die zuvor beschriebene Beschickungsvorrichtung kann in dem Verfahren verwendet werden. Insbesondere die Ausgestaltungen der angetriebenen Rollen sind hier inkludiert. Die Biegevorrichtung kann der zuvor beschriebenen Werkzeugmaschine entsprechen.

Verfahren zum Ausführen eines Biegevorgangs von mehreren Werkstücken aus Blech mit einer Biegevorrichtung, wobei ein Biegevorgang mehrere Biegeschritte umfasst und wobei die Biegevorrichtung einen Zuführbereich mit mehreren angetriebenen Rollen aufweist, welche eingerichtet sind zur Unterstützung und translatorischen und/oder rotatorischen Bewegung eines oder mehrerer Werkstücke, mit den Schritten:
a) Zuführen eines ersten Werkstücks zu einem ersten Werkzeugabschnitt der Biegevorrichtung durch die angetriebenen Rollen;
b) Abführen des ersten Werkstücks von der Biegevorrichtung durch die angetriebenen Rollen zum Zwischenlagern des ersten Werkstücks in dem Zuführbereich;
c) Zuführen des ersten Werkstücks zu einem zweiten Werkzeugabschnitt der Biegevorrichtung durch die angetriebenen Rollen; und zeitgleiches Zuführen eines zweiten Werkstücks zu dem ersten Werkzeugabschnitt der Biegevorrichtung durch die angetriebenen Rollen;
d) Biegen eines ersten Biegeschritts des zweiten Werkstücks mit Werkzeugen des ersten Werkzeugabschnitts;
e) Biegen eines zweiten Biegeschritts des ersten Werkstücks mit Werkzeugen des zweiten Werkzeugabschnitts;

Die Schritte d) und e) können zeitlich nacheinander - auch in umgekehrter Reihenfolge - oder zumindest teilweise gleichzeitig ausgeführt werden.

Eine Kombination der beiden Verfahren ist ebenfalls möglich, zum Beispiel kann in diesem Verfahren zusätzlich ein Werkzeugwechsel durchgeführt werden.

Der Begriff zeitgleiches Zuführen bedeutet, dass zwei oder auch mehr Werkstücke zur gleichen Zeit in dem Zuführbereich bewegt werden. Die Start- und Endpunkte der jeweiligen Bewegungen müssen dabei nicht übereinstimmen.

Es kann vorgesehen sein, dass mehr als zwei Werkzeugabschnitte vorgesehen sind. Je nach Breite der Biegevorrichtung können mehrere Werkzeugabschnitte vorgesehen sein, was die Flexibilität und die zeitliche Optimierung des Biegevorgangs erhöht.

Es kann ferner vorgesehen sein, dass das Verfahren so lange durchgeführt wird bis der letzte Biegeschritt des letzten Werkstücks durchgeführt ist. Nach dem letzten Biegeschritt kann das jeweilige Werkstück abtransportiert werden. Dies kann in ein separates Lager oder Zwischenlager oder in ein Zwischenlager in dem Zuführbereich sein.

Es kann vorgesehen sein, dass der Zuführbereich ein Lager, wie zum Beispiel ein Paternoster-Regal, umfasst oder mit einem derartigen Lager verbunden ist, um die durch einen oder mehrere Biegeschritte entstandenen Halbfabrikate dem Lager zuzuführen und dort temporär einzulagern.

Der Zuführbereich kann dem zuvor beschriebenen Transportbereich und/oder Übergabebereich entsprechen. Die zuvor beschriebene Beschickungsvorrichtung kann in dem Verfahren verwendet werden. Insbesondere die Ausgestaltungen der angetriebenen Rollen sind hier inkludiert. Die Biegevorrichtung kann der zuvor beschriebenen Werkzeugmaschine entsprechen.

Biegevorrichtung zum Ausführen eines Biegevorgangs von mehreren Werkstücken aus Blech, wobei ein Biegevorgang mehrere Biegeschritte umfasst,
mit einem Zuführbereich mit mehreren angetriebenen Rollen, welche eingerichtet sind zur Unterstützung und translatorischen und/oder rotatorischen Bewegung eines oder mehrerer Werkstücke,
mit einer Steuerung eingerichtet zum
a) Zuführen eines Werkstücks zu der Biegevorrichtung durch die angetriebenen Rollen;
b) Biegen eines ersten Biegeschritts des Werkstücks in der Biegevorrichtung;
c) Abführen des Werkstücks von der Biegevorrichtung durch die angetriebenen Rollen zum Zwischenlagern des Werkstücks in dem Zuführbereich;
d) Wiederholen der Schritte a) bis c) für weitere Werkstücke;
e) Vorbereiten der Biegevorrichtung für einen weiteren Biegeschritt;
f) Wiederholen der Schritte a) bis d) für weitere Werkstücke.

Es kann vorgesehen sein, dass die Aktion b) mehrere Biegeschritte umfasst. Vorteilhaft ist, dass alle mit dieser Konfiguration der Biegevorrichtung möglichen Biegeschritte durchgeführt werden.

Es kann vorgesehen sein, dass das Vorbereiten der Biegevorrichtung einen Wechsel der Biegewerkzeuge umfasst.

Es kann ferner vorgesehen sein, dass die Steuerung die Aktionen so lange durchführt bis der letzte Biegeschritt des letzten Werkstücks durchgeführt ist. Nach dem letzten Biegeschritt kann das jeweilige Werkstück abtransportiert werden. Dies kann in ein separates Lager oder Zwischenlager oder in ein Zwischenlager in dem Zuführbereich sein.

Es kann vorgesehen sein, dass der Zuführbereich beziehungsweise die Biegevorrichtung ein Lager, wie zum Beispiel ein Paternoster-Regal, umfasst oder mit einem derartigen Lager verbunden ist, um die durch einen oder mehrere Biegeschritte entstandenen Halbfabrikate dem Lager zuzuführen und dort temporär einzulagern.

Der Zuführbereich kann dem zuvor beschriebenen Transportbereich und/oder Übergabebereich entsprechen. Die zuvor beschriebene Beschickungsvorrichtung kann in dem Verfahren verwendet werden. Insbesondere die Ausgestaltungen der angetriebenen Rollen sind hier inkludiert. Die Biegevorrichtung kann der zuvor beschriebenen Werkzeugmaschine entsprechen.

Biegevorrichtung zum Ausführen eines Biegevorgangs von mehreren Werkstücken aus Blech mit einer Biegevorrichtung, wobei ein Biegevorgang mehrere Biegeschritte umfasst,
mit einem Zuführbereich mit mehreren angetriebenen Rollen, welche eingerichtet sind zur Unterstützung und translatorischen und/oder rotatorischen Bewegung eines oder mehrerer Werkstücke,
mit mindestens zwei an einer Biegelinie angeordneten und gleichzeitig zugänglichen Werkzeugabschnitten, und
mit einer Steuerung eingerichtet zum
a) Zuführen eines ersten Werkstücks zu einem ersten Werkzeugabschnitt der Biegevorrichtung durch die angetriebenen Rollen;
b) Abführen des ersten Werkstücks von der Biegevorrichtung durch die angetriebenen Rollen zum Zwischenlagern des ersten Werkstücks in dem Zuführbereich;
c) Zuführen des ersten Werkstücks zu einem zweiten Werkzeugabschnitt der Biegevorrichtung durch die angetriebenen Rollen; und zeitgleiches Zuführen eines zweiten Werkstücks zu dem ersten Werkzeugabschnitt der Biegevorrichtung durch die angetriebenen Rollen;
d) Biegen eines ersten Biegeschritts des zweiten Werkstücks mit Werkzeugen des ersten Werkzeugabschnitts;
e) Biegen eines zweiten Biegeschritts des ersten Werkstücks mit Werkzeugen des zweiten Werkzeugabschnitts;

Die Aktionen d) und e) können zeitlich nacheinander - auch in umgekehrter Reihenfolge - oder zumindest teilweise gleichzeitig ausgeführt werden.

Eine Kombination der beiden Verfahren ist ebenfalls möglich, zum Beispiel kann in diesem Verfahren zusätzlich ein Werkzeugwechsel durchgeführt werden.

Der Begriff zeitgleiches Zuführen bedeutet, dass zwei oder auch mehr Werkstücke zur gleichen Zeit in dem Zuführbereich bewegt werden. Die Start- und Endpunkte der jeweiligen Bewegungen müssen dabei nicht übereinstimmen.

Es kann vorgesehen sein, dass mehr als zwei Werkzeugabschnitte vorgesehen sind. Je nach Breite der Biegevorrichtung können mehrere Werkzeugabschnitte vorgesehen sein, was die Flexibilität und die zeitliche Optimierung des Biegevorgangs erhöht.

Es kann ferner vorgesehen sein, dass die Steuerung die Aktionen so lange durchgeführt bis der letzte Biegeschritt des letzten Werkstücks durchgeführt ist. Nach dem letzten Biegeschritt kann das jeweilige Werkstück abtransportiert werden. Dies kann in ein separates Lager oder Zwischenlager oder in ein Zwischenlager in dem Zuführbereich sein.

Es kann vorgesehen sein, dass der Zuführbereich ein Lager, wie zum Beispiel ein Paternoster-Regal, umfasst oder mit einem derartigen Lager verbunden ist, um die durch einen oder mehrere Biegeschritte entstandenen Halbfabrikate dem Lager zuzuführen und dort temporär einzulagern.

Der Zuführbereich kann dem zuvor beschriebenen Transportbereich und/oder Übergabebereich entsprechen. Die zuvor beschriebene Beschickungsvorrichtung kann in dem Verfahren verwendet werden. Insbesondere die Ausgestaltungen der angetriebenen Rollen sind hier inkludiert. Die Biegevorrichtung kann der zuvor beschriebenen Werkzeugmaschine entsprechen.

Für die obigen Ansprüche gelten die gleichen Vorteile wie für die zuvor beschriebene Beschickungsvorrichtung für eine Werkzeugmaschine, die Werkzeugmaschine, die Fertigungseinrichtung und das Verfahren zur Beschickung.

Der hier vorgestellte flexible Zuführbereich zur Maschine ermöglicht die mindestens 2-dimensionale Positionierung der Bleche an möglichst jedem Ort innerhalb des Zuführbereichs. Hauptsächlich wird die Zuführung zum Transport, bzw. Handling der Bleche und Biegeteile zur und von der Bearbeitungsstelle genutzt. Wie beschrieben, kann damit oftmals auf einen oder mehrere Werkzeugwechsel innerhalb des Bearbeitungsprozesses eines einzelnen Biegeteils verzichtet werden. Dadurch kann eine Totzeit vermieden werden, in der ein Halbfabrikat im Zuführbereich liegt und nicht bearbeitet wird.

Grundlegende Idee der Erfindung ist die Optimierung der Prozesszeit, indem nicht nur ein Blech im Prozess auf der Maschine bearbeitet wird, sondern möglichst gleich mehrere: Bleche eines Loses werden auf oder um den Zuführbereich gesammelt und entsprechend des geladenen Werkzeugsatzes der Bearbeitung zugeführt und gebogen. Die entstehenden Halbfabrikate werden anschließend ebenfalls gesammelt und zwischengelagert. Die Halbfertigprodukte haben dabei einen Bearbeitungsstand, bis zu dem ein Werkzeugwechsel nötig würde.

Die Zwischenlagerung erfolgt idealerweise bis kein Platz mehr vorhanden ist und die weitere Zuführung gestört wird oder bis das Los vollständig dem System zugeführt wurde.

Zur endgültigen Fertigstellung der gelagerten Halbfabrikate wird nun der Werkzeugsatz von der Maschine geändert und angepasst. Nach erfolgtem Wechsel, werden die Halbfabrikate wieder der Maschine zugeführt und die Bearbeitung der Biegeteile beendet.

Die Entnahme der Fertigteile aus dem System kann manuell oder automatisiert erfolgen. Möglich ist ebenso die Lagerung der Fertigteile an den dargestellten Stellen der Zwischenlagerung und eine anschließende, gemeinsame Entnahme.

Die Effizienzsteigerung der Biegeteil-Bearbeitung ist proportional zu der Anzahl der zwischengelagerten Teile: Je mehr Halbfabrikate zwischengelagert werden können, umso mehr verlangsamende Werkzeugwechsel werden eingespart.

Zusätzlich können auch Bleche anderer Lose auf oder um den Zuführbereich gelagert werden, wenn der zum Biegen benötigte Werkzeugsatz innerhalb der Bleche genutzt werden kann.

Wenn die Biegelänge der Maschine und die Kontur der Biegeteile es erlauben, können mehrere Bleche gleichzeitig gebogen werden. Die Halbfabrikate können unter dem Zuführbereich besonders platzsparend gelagert werden.

Figur 7 zeigt eine perspektivische Ansicht einer Biegevorrichtung 500 mit einem Zuführbereich 510 und einem Lager 520, beispielhaft in Form eines Paternoster-Regals.

Der Zuführbereich 510 überdeckt zumindest die gesamte Breite eines Bearbeitungsbereichs 530 der Biegevorrichtung 500. Der Zuführbereich 510 umfasst eine Vielzahl von angetriebenen Rollen 540, welche eingerichtet sind zur Unterstützung und translatorischen und/oder rotatorischen Bewegung eines oder mehrerer Werkstücke 300 zum Beispiel in Form von Blechen in unbearbeitetem oder bearbeitetem Zustand. Die angetriebenen Rollen 540 entsprechen den in Figur 2 dargestellten Rollen. Die Ausführungen zu den Rollen 130 gelten entsprechend für die Rollen 540.

In Figur 7 ist der Zuführbereich 510 mit Werkstücken in Form von Rohblechen 300 in verschiedenen Bearbeitungsständen dargestellt. Rohbleche werden zugeführt und alle Biegungen ohne Werkzeugwechsel durchgeführt. Die entstandenen Halbfabrikate 310 werden dem Lager 520 zugeführt und dort temporär eingelagert. Der Einlagerungsprozess erfolgt parallel zu weiteren Biegeprozessen gleicher Biegeteile.

Die Beendigung des Loses oder der Füllstand des Lager 520 beenden die ersten Prozess-Schritte und erfordern nun den Maschinenwerkzeugwechsel. Danach werden die Halbfabrikate 310 dem Lager 520 entnommen und der Biegevorrichtung 500 für die letzten Biegungen zugeführt.

Fertige Biegeteile können der Biegevorrichtung 500 komplett entnommen oder wieder dem Lager 520 zugeführt werden. Das Lager 520 könnte dann der nächsten Bearbeitungsmaschine übergeben werden und damit die Effizienz weiter steigern.

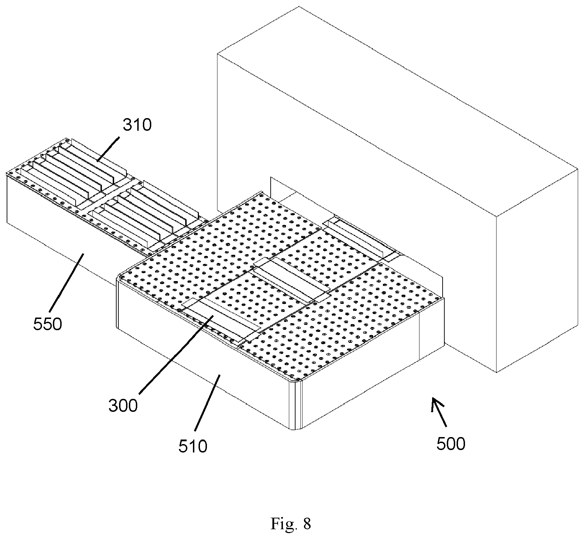

Figur 8 zeigt eine perspektivische Ansicht der Biegevorrichtung 500 mit einem erweiterten Zuführbereich 550.

Die Grundkonfiguration der Biegevorrichtung 500 entspricht der in Figur 7 gezeigten Biegevorrichtung 500. Hier ist jedoch eine 2-dimensionale Zwischenlagerung in Form des erweiterten Zuführbereichs 550 dargestellt, der in der Ebene des Zuführbereichs 510 angeordnet ist.

Der erweiterte Zuführbereich 550 kann eine modulare Erweiterung des Zuführbereiches 510 darstellen. Die Lagerung der Halbfabrikate 310 erfolgt in dem erweiterten Zuführbereich 550. Es können auch in dem Zuführbereich 510 Halbfabrikate 310 zwischengelagert werden.

Die Lagerung der Halbfabrikate 310 kann dynamisch erfolgen, oder mittels weiteren erweiterten Zuführbereichen 550 oder einem Förderband zu einer anderen Lagerstelle erfolgen. Es können auch mehrere erweiterte Zuführbereiche 550 vorgesehen sein.

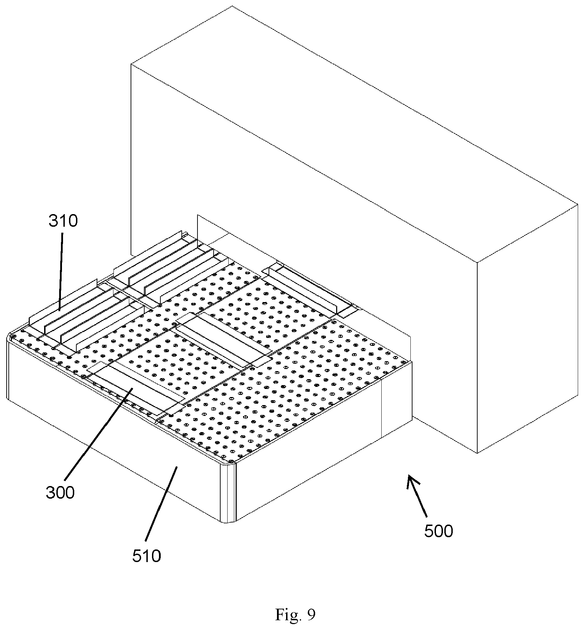

Figur 9 zeigt eine perspektivische Ansicht einer Biegevorrichtung 500 mit einem Zwischenlager im Zuführbereich 510.

Hier bildet der Zuführbereich 510 ein Zwischenlager in einem Bereich, der der nicht direkt für die Zuführung von Werkstücken 300 zu der Biegevorrichtung 500 benötigt wird. Dies kann zum Beispiel für Kleinserien oder bei beengten Platzverhältnissen zum Einsatz gelangen.

Die Halbfabrikate 310 werden nach der Bearbeitung mittels der angetriebenen Rollen zu dem als Zwischenlager definierten Bereich des Zuführbereichs 510 transportiert. Die Definition des Zwischenlagers kann von einem Bediener in der Steuerung eingerichtet werden oder die Steuerung kann dies basierend auf der zu fertigenden Stückzahl und der Größe der Werkstücke 300 automatisch vornehmen.

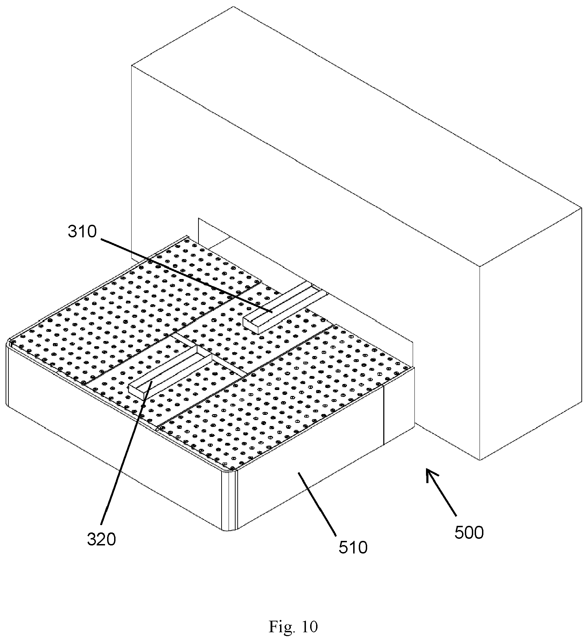

Figur 10 zeigt eine perspektivische Ansicht einer Biegevorrichtung 500 mit Zuführbereich 510 bei einer Schlussbiegung.

Gezeigt ist eine Darstellung der letzten Biegung eines Halbfabrikats 310 und die Abführung eines Fertigteils 320. Wie zuvor beschrieben können Werkstücke 300 in verschiedenen Bearbeitungszuständen gleichzeitig in dem Zuführbereich 510 bewegt und auch zwischengelagert werden. Dies führt zu einer stark erhöhten Effizienz. Eine Bahnsteuerung von Werkstücken 300, Halbfabrikaten 310 und/oder Fertigteilen 320 kann um zwischengelagerte Teile herum erfolgen.

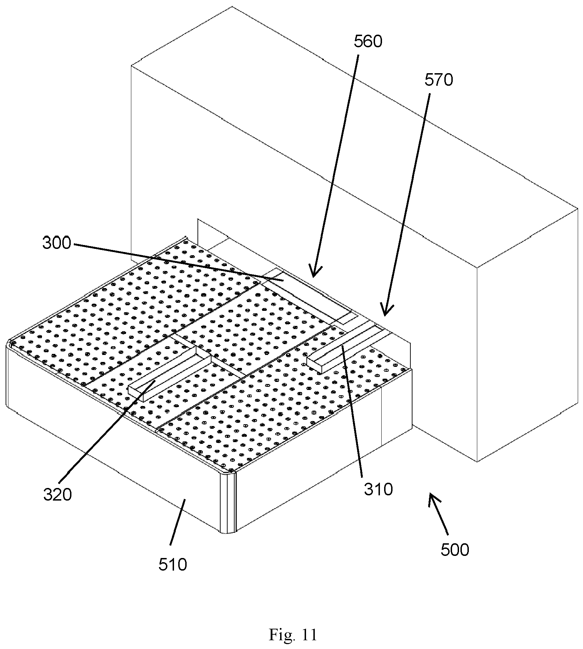

Figur 11 zeigt eine perspektivische Ansicht einer Biegevorrichtung 500 mit Zuführbereich 510 im Stationsbetrieb. Dargestellt eine Variante mit einem möglichen Stationsbetrieb der Biegevorrichtung 500 hier in Form eines Panelbenders zur Effizienzsteigerung.

Die Werkzeuge der Biegevorrichtung 500 werden über die Breite der Biegevorrichtung 500 entsprechend den Biegungen des Bleches oder Werkstücks 300 in Stationen oder Werkzeugabschnitten 560, 570 angeordnet. Es sind mindestens zwei an einer Biegelinie angeordnete und gleichzeitig zugängliche Werkzeugabschnitte 560, 570 vorgesehen.

Der Zuführbereich 510 mit den angetriebenen Rollen in Verbindung mit dem ersten Werkzeugabschnitt 560 und dem zweiten Werkzeugabschnitt 570 erlaubt eine gleichzeitige, zeitlich überlappende oder zeitlich direkt aufeinanderfolgende Bearbeitung verschiedener Werkstücke. Beispielhaft dargestellt ist die Bearbeitung eines noch unbearbeiteten Werkstücks 300 an dem ersten Werkzeugabschnitt 560 und die Bearbeitung eines Halbfabrikats 310 an dem zweiten Werkzeugabschnitt 570. Zeitgleich findet die Abführung eines Fertigteils 320 statt.

Ein Blech kann somit an zwei oder mehr verschiedenen Positionen der Biegevorrichtung 500 zugeführt und gebogen werden. Ein Werkzeugwechsel ist somit innerhalb des Biegeprozesses überflüssig, da die Rohbleche beziehungsweise Halbfabrikate 310 an den zugewiesenen und bereits bestückten Werkzeugstationen bearbeitet werden. Zudem ist eine Kombination mit Zwischenlagerung bei passenden Biegeteilen möglich.

Die Beschickungsvorrichtung 100 mit dem Transportbereich 120 und dem Übergabebereich 110 stellt durch die angetriebenen Rollen 130 mehrere voneinander unabhängige Transportbahnen oder -wege bereit, so dass zeitgleich mehrere Werkstücke 300 und 310 bewegt werden können. Dies erhöht die Flexibilität der Blechverarbeitung.

## Patentansprüche

1. Beschickungsvorrichtung (100) für eine Werkzeugmaschine (200), mit einem Übergabebereich (110) eingerichtet zur Übergabe und/oder Unterstützung eines Werkstücks (300, 310) während einer Bearbeitung durch die Werkzeugmaschine (200) und mindestens einem Transportbereich (120, 120a, 120b, 120c) eingerichtet zum Transport eines Werkstücks (300, 310) zu dem Übergabebereich (110),
wobei der mindestens eine Transportbereich (120) mehrere angetriebene Rollen (130) zur Unterstützung und translatorischen und/oder rotatorischen Bewegung eines oder mehrerer Werkstücke (300) aufweist, und
wobei der Übergabebereich (110) mehrere angetriebene Rollen (130) und/oder ein Positionierungselement (140) zur Positionierung eines Werkstücks (300, 310) aufweist, wobei das Positionierungselement (140) in Richtung zu einem Bearbeitungsbereich (210) der Werkzeugmaschine (200) verfahrbar ist.

2. Beschickungsvorrichtung (100) für eine Werkzeugmaschine (200) nach Anspruch 1, **dadurch gekennzeichnet, dass** die angetriebene Rolle (130) über einen Winkelbereich von 360 Grad in einer Ebene des Übergabebereichs (110) oder des Transportbereichs (120) drehbar ist.

3. Beschickungsvorrichtung (100) für eine Werkzeugmaschine (200) nach einem der vorhergehenden Ansprüche, **dadurch gekennzeichnet, dass** die angetriebenen Rollen (130) auf eine Translationsrichtung in Richtung des mindestens einen Positionierungselements (140) hin ausgerichtet sind.

4. Beschickungsvorrichtung (100) für eine Werkzeugmaschine (200) nach einem der vorhergehenden Ansprüche, **dadurch gekennzeichnet, dass** mehrere Positionierungselemente (140) vorgesehen sind.

5. Beschickungsvorrichtung (100) für eine Werkzeugmaschine (200) nach einem der vorhergehenden Ansprüche, **dadurch gekennzeichnet, dass** das oder jedes Positionierungselement (140) in eine Ruheposition unterhalb einer Ebene des Übergabebereichs (110) versetzbar ist und in eine Arbeitsposition aus der Ebene des Übergabebereichs (110) heraus bewegbar ist.

6. Beschickungsvorrichtung (100) für eine Werkzeugmaschine (200) nach einem der vorhergehenden Ansprüche, **dadurch gekennzeichnet, dass** das Positionierungselement (140) in der Ebene des Übergabebereichs (110) seitlich in eine erste und in wenigstens eine zweite senkrecht dazu angeordnete Richtung bewegbar ist.

7. Beschickungsvorrichtung (100) für eine Werkzeugmaschine (200) nach einem der vorhergehenden Ansprüche, **dadurch gekennzeichnet, dass** ein Sensor (180) zur Erfassung der Position und/oder Ausrichtung eines Werkstücks (300, 310) vorgesehen ist.

8. Beschickungsvorrichtung (100) für eine Werkzeugmaschine (200) nach einem der vorhergehenden Ansprüche, **dadurch gekennzeichnet, dass** eine Messeinheit vorgesehen ist eingerichtet zum Erfassen der Stromaufnahme der mehreren angetriebenen Rollen (130).

9. Beschickungsvorrichtung (100) für eine Werkzeugmaschine (200) nach einem der vorhergehenden Ansprüche, **dadurch gekennzeichnet, dass** eine gemeinsame Antriebseinheit für mehrere der angetriebenen Rollen (130) vorgesehen ist und dass für jede der angetriebenen Rollen (130) eine schaltbare Kupplung als Verbindung zu der Antriebseinheit vorgesehen ist.

10. Beschickungsvorrichtung (100) für eine Werkzeugmaschine (200) nach einem der vorhergehenden Ansprüche, **dadurch gekennzeichnet, dass** der Übergabebereich (110) und der mindestens eine Transportbereich (120) neben den mehreren angetriebenen Rollen (130) mehrere nicht angetriebene Rollen aufweisen.

11. Werkzeugmaschine (200) eingerichtet zur Bearbeitung von Werkstücken (300, 310) mit einer Beschickungsvorrichtung (100) nach einem der Ansprüche 1 bis 10.

12. Werkzeugmaschine (200) nach Anspruch 11, **dadurch gekennzeichnet, dass** die Werkzeugmaschine (200) ein Positionierungselement (140) aufweist, das zur Positionierung eines Werkstücks (300, 310) eingerichtet ist.

13. Fertigungseinrichtung (400) mit mindestens einer Werkzeugmaschine (200) nach Anspruch 11 oder 12, mindestens einer Beschickungsvorrichtung (100) nach einem der Ansprüche 1 bis 10 und mindestens einer weiteren der Werkzeugmaschine (200) vor- und/oder nachgelagerten Fertigungseinheit (410), **dadurch gekennzeichnet, dass** jeweils ein Transportbereich (120, 120a, 120c) zwischen der Werkzeugmaschine (200) und der vor- und/oder nachgelagerten Fertigungseinheit angeordnet ist.

14. Verfahren zur Beschickung einer Werkzeugmaschine (200) eingerichtet zur Bearbeitung von Werkstücken (300, 310), mit den Schritten,
- transportieren eines Werkstücks (300, 310) mittels mehrerer angetriebener Rollen (130) zu einem Übergabebereich (110) für die Werkzeugmaschine (200);
- Übergeben und/oder Unterstützen des Werkstücks (300, 310) in dem Übergabebereich (110) während einer Bearbeitung durch die Werkzeugmaschine (200).

15. Verfahren zur Beschickung einer Werkzeugmaschine (200) nach Anspruch 14, **dadurch gekennzeichnet, dass** in dem Übergabebereich (110) das Werkstück (300) positioniert und der Werkzeugmaschine (200) mittels mehrerer angetriebener Rollen (130) zugeführt wird.
